# EUROPÄISCHE PATENTANMELDUNG

(11) **EP 0 909 785 A2**
(43) Veröffentlichungstag der Anmeldung: **21.04.1999**
(21) Anmeldenummer: 98811009.4
(22) Anmeldetag: 07.10.1998
(51) Int. Cl.: C08K 5/098, C08L 23/06, C08L 77/00, C08L 21/00, C08L 53/02

(54) **Antistatisch-ausgerüstete Polymere**

(30) Priorität: 16.10.1997 CH 2410/97
(71) Anmelder: Ciba Specialty Chemicals Holding Inc., 4057 Basel (CH)
(72) Erfinder: Grob, Markus, 4123 Allschwil (CH); Minder, Ernst, 4450 Sissach (CH); Pfeiffer, Jürgen, 4153 Reinach (CH)

(57) **Zusammenfassung**

Die Erfindung betrifft eine Polymerzusammensetzung enthaltend
(a) Polyethylen hoher Dichte (HDPE), Polyamid 11, Polyamid 12 (PA 11, PA 12), ein natürliches oder synthetisches elastomeres Polymer oder Copolymer oder ein natürliches oder synthetisches elastisches Vulkanisat,
(b) ein Polyoxyalkylen der Formel
   R₁-O-[CH(R₃)-CH₂-O-]ₙ-[CH₂-[CH(OH)ₚ-CH₂-O]_{q}-[C(O)]ᵣ-R₂ (I), wobei
   R₁ H, C₁-C₂₄-Alkyl, C₂-C₂₄-Alkenyl, CH₂=CH-C(O) oder CH₂=CCH₃-C(O),
   R₂ C₁-C₂₄-Alkyl, C₂-C₂₄-Alkenyl, CH₂-COOH, oder N(C₁-C₂₀-Alkyl)₂,
   R₃ H oder CH₃,
   n eine Zahl grösser oder gleich 2,
   p eine Zahl von 1 bis 6, und
   q und r, unabhängig voneinander, 0 oder 1 ist;
   und (c) ein Salz der Formel {M^{z+}ₐA^{(az/b)-} _{b}} wobei
   M ein z-wertiges Alkalimetall-, Erdalkalimetall- oder Zinkkation,
   a und b, unabhängig voneinander, eine Zahl zwischen 1 und 6, und
A ein Anion einer anorganischen Protonensäure oder einer einfachen oder mehrfachen organischen Carbonsäure ist. Die Polymerzusammensetzung weist sehr gute antistatische Eigenschaften auf.

## Beschreibung

Die Erfindung betrifft antistatisch ausgerüstetes Polyethylen hoher Dichte (HDPE), Polyamid 11, Polyamid 12 (PA 11, PA 12), natürliche oder synthetische elastomere Polymere oder Copolymere und natürliche oder synthetische elastische Vulkanisate, ein Verfahren zur Herstellung dieser antistatischen Co/Polymeren sowie die Verwendung eines Antistatikums zur antistatischen Ausrüstung von HDPE, PA 11, PA12, natürlichen oder synthetischen elastomeren Polymeren oder Copolymeren und natürlichen oder synthetischen elastischen Vulkanisaten.

Ein Nachteil von vielen Polymeren und damit auch der vorstehend genannten Polymeren liegt in ihrer starken elektrostatischen Aufladbarkeit. Einmal aufgebrachte Ladungen können wegen der geringen Leitfähigkeit nicht rasch genug abgeführt werden. Neben ästhetischen und gebrauchstechnischen Gründen erfordem jedoch vielfach Sicherheitsaspekte einen raschen Ladungsabfluss. Ist dieser nicht gewährleistet, so kann es zu Verschmutzung von Polymeroberflächen, Aufladung von Personen bei Kontakt mit Polymeren, Produktionsstörungen durch Verkleben von Folienbahnen, Klumpenbildung bei Polymerpulvern und Funkenbildung durch starke Aufladungen mit nachfolgender Zündung von Staub- oder Lösungsmittel/Luft-Gemischen kommen.

Häufig werden gegen statische Aufladung Stoffe eingesetzt, welche die Oberflächenleitfähigkeit verbessern. Diese Stoffe haben jedoch den Nachteil, dass sie bei geringer Luftfeuchtigkeit praktisch unwirksam sind, weshalb man dann zu Stoffen greift, welche die Volumenleitfähigkeit erhöhen. Die bekannten Stoffe zur Erhöhung der Volumenleitfähigkeit, beispielsweise Russ oder Metallpulver, setzen jedoch die mechanischen Eigenschaften der Polymeren herab und sind für transparente Polymere nicht anwendbar.

Weitere Ausführungen zu antistatischen Additiven und dem Mechanismus der statischen Aufladung finden sich beispielsweise im "Plastics Additives Handbook", Herausgeber R. Gächter und H. Müller, Hanser Verlag, 3.Auflage, 1990, Seiten 749-775.

Es besteht daher weiterhin das Bedürfnis ein antistatisch wirkendes Additivsystem zur Verfügung zu haben, welches das Polymer dauerhaft und unabhängig von äusseren Parametem leitfähig macht. Gleichzeitig sollen sonstige Polymereigenschaften nicht nachteilig verändert werden. Insbesondere sind Additivsysteme erwünscht, welche auch bei geringer Luftfeuchtigkeit wirksam sind und somit vor allem die Volumenleitfähigkeit des Polymeren erhöhen.

Das Antistatikum der vorliegenden Erfindung ist an sich bekannt und in der EP-A-751 179 für halogenhaltige Polymere beschrieben.

Überraschend wurde nun gefunden, dass sich die dort beschriebenen Polyoxyalkylene in Kombination mit einem ausgewählten anorganischen Salz auch für HDPE, Polyamid 11, Polyamid 12 (PA 11, PA 12), natürliche oder synthetische elastomere Polymere oder Copolymere und natürliche oder synthetische elastische Vulkanisate hervorragend eignen und diesen Systemen eine gute Leitfähigkeit verleihen. Da es sich bei dem Antistatikum um polare organische Verbindungen und anorganische Salze handelt, ist es überraschend, dass sich dieses System für unpolare Co/Polymere eignet und es nicht zu Unverträglichkeiten, wie z. B. Ausschwitzen des Antistatikums, kommt.

Die antistatisch ausgerüsteten Polymere sind ausserordentlich stabil und weisen auch nach langer Lagerung und/oder thermischer Belastung noch hohe elektrische Leitfähigkeiten auf.

Das Antistatikum ist frei von Aminen und daher für metallische Substrate kaum korrosiv.

Ein Gegenstand der Erfindung ist somit eine Zusammensetzung enthaltend
(a) Polyethylen hoher Dichte (HDPE), Polyamid 11, Polyamid 12 (PA 11, PA 12),ein natürliches oder synthetisches elastomeres Polymer oder Copolymer oder ein natürliches oder synthetisches elastisches Vulkanisat,
(b) ein Polyoxyalkylen der Formel
   R₁-O-[CH(R₃)-CH₂-O-]ₙ-[CH₂-[CH(OH)]ₚ-CH₂-O]_{q}-[C(O)]ᵣ-R₂ (I), wobei
   R₁ H, C₁-C₂₄-Alkyl, C₂-C₂₄-Alkenyl, CH₂=CH-C(O) oder CH₂=CCH₃-C(O),
   R₂ C₁-C₂₄-Alkyl, C₂-C₂₄-Alkenyl, CH₂-COOH, oder N(C₁-C₂₀-Alkyl)₂,
   R₃ H oder CH₃,
   n eine Zahl grösser oder gleich 2,
   p eine Zahl von 1 bis 6, und
   q und r, unabhängig voneinander, 0 oder 1 ist;
   und (c) ein Salz der Formel {M^{z+}ₐA^{(az/b)-}_{b}} wobei
   M ein z-wertiges Alkalimetall-, Erdalkalimetall- oder Zinkkation,
   a und b, unabhängig voneinander, eine Zahl zwischen 1 und 6, und
   A ein Anion einer anorganischen Protonensäure oder einer einfachen oder mehrfachen organischen Carbonsäure ist.

Beispiele für elastomere Polymere oder Copolymere sind zum Beispiel Copolymere von Styrol oder α-Methylstyrol mit Dienen oder Acrylderivaten, wie z.B. Styrol-Butadien, Styrol-Butadien-Alkylacrylat und -methacrylat, Styrol-Maleinsäureanhydrid, sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.

Weitere Beispiele sind Pfropfcopolymere von Styrol oder α-Methylstyrol, wie z.B. Styrol auf Polybutadien, Styrol und Maleinsäureanhydrid auf Polybutadien, Styrol und Maleinsäureimid auf Polybutadien oder Styrol und Acrylnitril auf Ethylen-Propylen-Dien-Terpolymeren,

Ferner EPDM sowie während der Verarbeitung kondensierte Polyamide ("RIM--Polyamidsysteme").

Gut geeignet sind auch Polyamid 11 und Polyamid 12.

Geeignet sind auch Polyurethane, die sich von Polyethern, Polyestern und Polybutadienen mit endständigen Hydroxylgruppen einerseits und aliphatischen oder aromatischen Polyisocyanaten andererseits ableiten.

Bei den natürlichen Polymeren ist vor allem Naturkautschuk zu nennen,

Mischungen (Polyblends) der vorgenannten Polymeren sind ebenfalls möglich.

Weitere geeignete Polymere sind wässrige Emulsionen natürlicher oder synthetischer Kautschuke, wie z.B. Naturkautschuk-Latex oder Latices von carboxylierten Styrol-Butadien-Copolymeren.

Bevorzugt ist als Komponente a) HDPE.

Ebenfalls bevorzugte Komponenten a) sind Elastomere, welche ein Polydien enthalten, wie zum Beispiel Polybutadien Kautschuk.

Eine weitere bevorzugte Gruppe von Elastomeren sind solche auf Basis konjugierter Diene mit monovinylsubstituierten Aromaten. Es handelt sich dabei bevorzugt um Blockcopolymere, bei denen der eine Block im wesentlichen aus dem vinylsubstituierten Aromaten besteht und der andere Block aus polymerisiertem konjugiertem Dien. Die Herstellung solcher Polymerer und ihre Verwendung ist zum Beispiel in der EP-A-0 346 823 beschrieben.

Als konjugierte Diene kommen insbesondere, 1,3 Butadien, Isopren, 2,3-Dimethyl-1,3-butadien, Piperylen oder 3-Butyl-1,3-octadien in Betracht.

Beispiele für vinylsubstituierte Aromaten sind Styrol, 3-Methylstyrol, 4-n-Propylstyrol, 4-Cyclohexylstyrol, 4-Decylstyrol, 2-Ethyl-4-benzylstyrol, 4-p-Toluylstyrol, 4-(4-Phenyl-n-butyl)styrol, 1-Vinylnaphthalin oder 2-Vinylnaphthalin.

Sternförmig verzweigte Styrol-Butadien Blockcopolymere und ihre Herstellung sind beispielsweise in der DE-OS-39 14 945 beschrieben.

Geeignet sind auch "High Impact Polystyrole (HIPS)" welche Polybutadien enthalten.

Die erfindungsgemäss als Komponente (b) verwendbaren Polyoxyalkylene der Formel (I) R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O) oder CH₂=CCH₃-C(O),
R₂ C₁-C₂₄-Alkyl, C₂-C₂₄-Alkenyl, CH₂-COOH, oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist
sind allgemein bekannt und können, soweit sie nicht im Handel erhältlich sind, nach Analogieverfahren hergestellt werden.

Bedeuten Substituenten in den Verbindungen der Formel (I) Alkyl mit 1 bis 24 Kohlenstoffatomen, so kommen hierfür Reste wie Methyl, Ethyl, Propyl, Butyl, Pentyl, Hexyl, Heptyl, Octyl, Nonyl, Decyl, Undecyl, Dodecyl, Tetradecyl, Hexadecyl, Octadecyl, Eicosyl, Docosyl und Tetracosyl sowie entsprechende verzweigte Isomeren in Frage.

Bedeuten Substituenten in den Verbindungen der Formel (I) Alkenyl mit 1 bis 24 Kohlenstoffatomen, so leiten sich diese Reste von den genannten Alkylresten ab, wobei bevorzugt die Doppelbindung in der Mitte der Kohlenwasserstoffkette angeordnet ist. Besonders bevorzugt ist als Alkenylrest Oleyl. Wenn r 1 ist bedeutet R₂ als Alkenyl bevorzugt auch CH₂=CH- oder CH₂=CCH₃-.

In den Verbindungen der Formel (I) bedeutet R₁ bevorzugt H oder C₁-C₄-Alkyl und ganz besonders bevorzugt H.

In den Verbindungen der Formel (I) bedeutet R₂ bevorzugt C₆-C₂₀-Alkyl oder C₆-C₂₀-Alkenyl.

In den Verbindungen der Formel (I) bedeutet n bevorzugt eine Zahl zwischen 2 und 20 und ganz besonders bevorzugt eine Zahl zwischen 2 und 14.

In den Verbindungen der Formel (I) bedeutet p bevorzugt eine Zahl zwischen 2 und 6 und ganz besonders bevorzugt die Zahl 4.

In den Verbindungen der Formel(I) bedeutet q bevorzugt die Zahl 0 oder 1 und r die Zahl 1 und ganz besonders bevorzugt bedeutet q die Zahl 0 und r die Zahl 1.
Besonders bevorzugt sind Verbindungen der Formel (I), worin R₁ H, R₂ C₆-C₂₀-Alkyl oder C₆-C₂₀-Alkenyl, R₃ H oder CH₃, n eine Zahl zwischen 2 und 14, q null und r eins ist.

Besonders bevorzugt sind Polypropylenglykollaurylester, Polypropylenglykololeylester, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether und Polyethylenglykollaurylethercarbonsäure.

Ganz besonders bevorzugt sind Polyethylenglykololeylether und speziell Polyethylenglykollaurylester.

Die erfindungsgemäss als Komponente (b) verwendbare Verbindung der Formel (I) kann in einer Menge von beispielsweise 0,05 bis 50, zweckmässig 0,05 bis 30, besonders bevorzugt 0,05 bis 20 Gew.-Teilen, bezogen auf 100 Gew.-Teile Polymer, eingesetzt werden.

Die erfindungsgemäss als Komponente (c) verwendbaren Salze der Formel (M^{z+}ₐA^{(az/b)-}_{b}}, wobei M ein z-wertiges Alkalimetall-, Erdalkalimetall- oder Zinkkation, a und b, unabhängig voneinander, eine Zahl zwischen 1 und 6, und A ein Anion einer anorganischen Protonensäure oder einer einfachen oder mehrfachen organischen Carbonsäure ist, sind allgemein bekannt und überwiegend im Handel erhältlich.

M leitet sich als Alkalimetall-, Erdalkalimetall- oder Zinkkation bevorzugt von den Metallen Li, Na, K, Cs, Ca, Mg, Sr, Ba und Zn ab. Insbesondere leitet sich M von den Metallen Li, Na, K, Ca, Mg und Zn ab.

A ist das Anion einer anorganischen Protonensäure oder einer einfachen oder mehrfachen organischen Carbonsäure, wobei auch Säuren umfasst sind, welche in freier Form nicht existent sind, sondern nur in Form ihrer Salze existieren. A leitet sich bevorzugt von Säuren aus der Gruppe der anorganischen Sauerstoffsäuren, der anorganischen Komplexsäuren und der organischen Carbonsäuren ab. Beispielhaft sind die folgenden Anionen zu nennen: Perchlorat, Hexafluorophosphat, Trifluormethylsulfonat, Tetrafluoroborat oder Perfluorbutylsulfonat, Acetat, Propionat, Maleat oder Citrat.

Besonders bevorzugt ist als Komponente (c) ein anorganisches Salz ausgewählt aus der Gruppe: LiCIO₄, LiCF₃SO₃, NaCIO₄, NaCF₃SO₃, KCIO₄, KPF₆, KCF₃SO₃, KC₄F₉SO₃, Ca(CIO₄)₂, Ca(PF₆)₂, CaCF₃SO₃, Mg(CIO₄)₂, Mg(CF₃SO₃)₂, Zn(CIO₄)₂, Zn(PF₆)₂ und Ca(CF₃SO₃)₂.

Bevorzugte organische Salze sind Natriumacetat, Natriumpropionat, Kaliumhydrogenmaleat, Natriumcitrat oder Kalium Natrium-Citrat.

Die Salze können auch noch verschiedene Mengen Kristallwasser enthalten.

Ganz besonders bevorzugt enthält die Zusammensetzung als anorganisches Salz (c) NaCIO₄, LiCF₃SO₃, KCIO₄ oder LiCIO₄.

Das erfindungsgemäss als Komponente (c) verwendbare anorganische Salz kann in einer Menge von beispielsweise kleiner 10, zweckmässig kleiner 5, besonders bevorzugt 0,005 bis 3 Gew.-Teilen, bezogen auf 100 Gew.-Teile Polymer, eingesetzt werden. )

In einer bevorzugten Ausführungsform der Erfindung beträgt das Gewichtsverhältnis von Komponente (b) zu Komponente (c) zwischen 1:1 und 100:1.

Bevorzugt enthält die erfindungsgemässe polymere Zusammensetzung keine Polyoxyalkylen Ammonium Salze, insbesondere keine N, Polyoxyalkylen N, N, N Trialkylammoniumsalze oder N, N Dipolyoxyalkylen N, N Dialkylammoniumsalze. Bevorzugt sind auch die entsprechenden Amine nicht enthalten. Alkali Salze von Alkylsulfonaten, insbesondere Na-Alkylsulfonate sind als Zusatzstoffe im Rahmen der vorliegenden Erfindung ebenfalls nicht geeignet.

Die erfindungsgemässe polymere Zusammensetzung kann weitere Additive enthalten. Diese weiteren Additive gehören vor allem zur Gruppe der Thermo- und /oder Lichtstabilisatoren. Die thermische Stabilisierung umfasst dabei sowohl die Verarbeitung wie auch den Gebrauch (Langzeitstabilität). Sie sind dem Fachmann bekannt und zum überwiegenden Teil kommerziell erhältlich.

Als weitere Additive kommen beispielsweise in Betracht:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(a-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(a-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tert-butyl-4-hydroxy-2-methylphenyl)pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3 ,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3.5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis(3,5-di-tert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).

### 1.18. Ascorbinsäure (Vitamin C).

1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-lsopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diaminodiphenylmethan, 1,2-Di-[(2-methyl-phenyl)-amino]-ethan, 1,2-Di-(phenylamino)-propan, (o-Tolyl)-biguanid, Di-[4-(1 ,3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 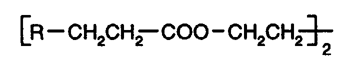 mit R = 3'-tert-Butyl-4'-hydroxy-5'-2H-benzotriazol-2-yl- phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.

2.2. 2-Hydrozybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bemsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-amino-piperidin oder 1,2,2,6,6-Pentamethyl-4-aminopiperidin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-(2-Hydroxy-4-[3-(2-ethylhexyl-1-oxy)-2-hydroxypropyloxy]phenyl}-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tert-butyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.

Besonders bevorzugt werden die folgenden Phosphite verwendet:

Tris(2,4-di-tert-butylphenyl)-phosphit (Irgafos®168, Ciba-Geigy), Tris(nonylphenyl)-phosphit,

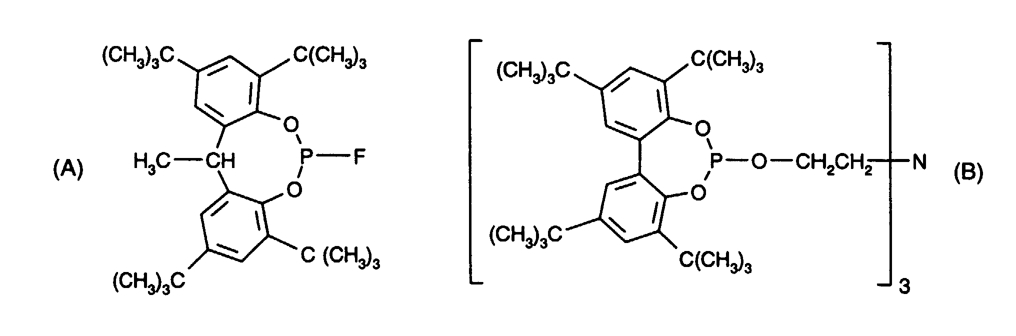

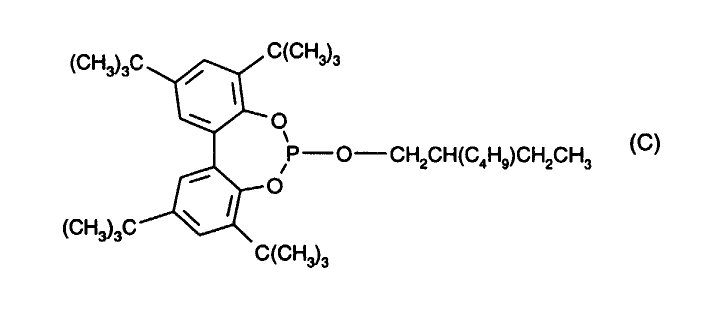

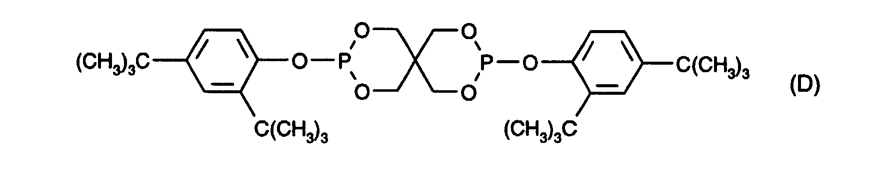

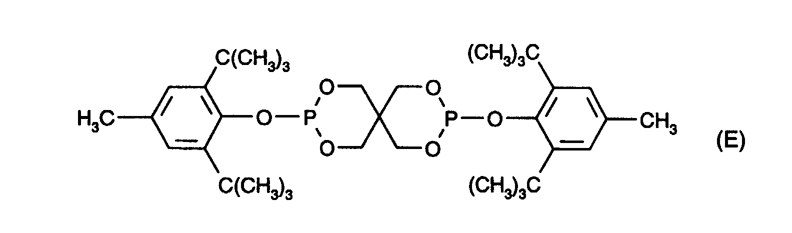

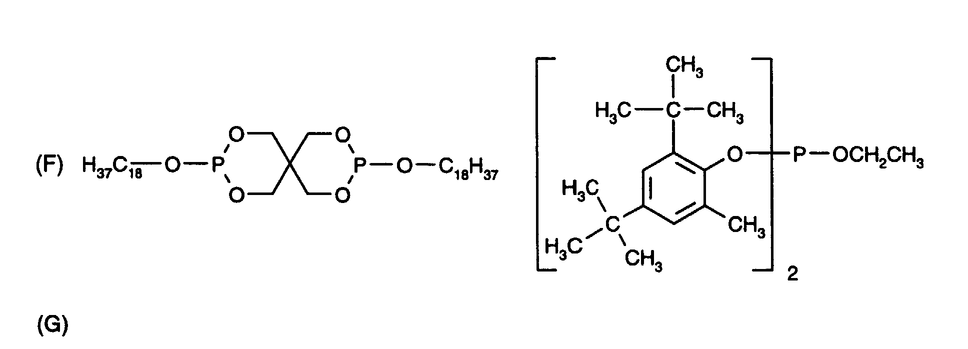

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alpha-heptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäure-distearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali-und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinkbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologleadditive, Katalysatoren, Verlaufshilfsmittel, Optische Aufheller, Flammschutzmittel, Treibmittel.

14. Benzofuranone bzw. Indolinone, wie z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxy-ethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Als Gleitmittel kommen beispielsweise in Betracht:
Montanwachs, Fettsäureester, PE-Wachse, Amidwachse, Polyolpartialester, teilverseifte PE-Wachse, sogenannte Komplexester Chlorparaffine, Glycerinester, Erdalkaliseifen oder Fettketone wie in DE4204887 beschrieben. Verwendbare Gleitmittel sind auch in "Taschenbuch der Kunststoff-Additive", Herausgeber R. Gächter und H. Müller, Hanser Verlag, 3.Auflage, 1990, Seiten 443-503 beschrieben. Weitere Gleitmittelausführungen insbesondere Kombinationen sind zu entnehmen in EP0062813 und EP 0336289.

Bevorzugt ist ferner eine Zusammensetzung, die zusätzlich ein phenolisches Antioxidans und/oder ein Phosphit, insbesondere jeweils 0,1 bis 5,0 Teile je 100 Teile Polymer, enthält.

Ein weiterer Gegenstand der vorliegenden Erfindung ist die Verwendung einer Additivmischung enthaltend ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, CH₂COOH oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist;
und ein Salz der Formel {M^{z+}ₐA^{(az/b)-}_{b}}, wobei
M ein z-wertiges Alkalimetall-, Erdalkalimetall- oder Zinkkation,
a und b, unabhängig voneinander, eine Zahl zwischen 1 und 6, und

A ein Anion einer anorganischen Protonensäure oder einer einfachen oder mehrfachen organischen Carbonsäure ist;
zur Verbesserung der antistatischen Eigenschaft von Polyethylen hoher Dichte (HDPE), Polyamid 11, Polyamid 12 (PA 11, PA 12), einem natürlichen oder synthetischen elastomeren Polymer oder Copolymer oder einem natürlichen oder synthetischen elastischen Vulkanisat.

Ebenfallls Gegenstand der Erfindung ist ein Verfahren zur Herstellung von antistatischausgerüstetem Polyethylen hoher Dichte (HDPE), Polyamid 11, Polyamid 12 (PA 11, PA 12),einem natürlichen oder synthetischen elastomeren Polymer oder Copolymer oder einem natürlichen oder synthetischen elastischen Vulkanisat, dadurch gekennzeichnet, dass man unter Verwendung von Vorrichtungen, wie Kalander, Mischer, Kneter, Extruder, eine Additivmischung enthaltend
ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, CH₂-COOH oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist;
und ein Salz der Formel {M^{z+}ₐA^{(az/b-}_{b}} wobei
M ein z-wertiges Alkalimetall-, Erdalkalimetall- oder Zinkkation,
a und b, unabhängig voneinander, eine Zahl zwischen 1 und 6, und

A ein Anion einer anorganischen Protonensäure oder einer einfachen oder mehrfachen organischen Carbonsäure ist;
als solche oder in Form ihrer einzelnen Bestandteile und gegebenenfalls weiterer Zusätze mit einem Polyethylen hoher Dichte (HDPE), PA 11, PA 12, einem natürlichen oder synthetischen elastomeren Polymer oder Copolymer oder einem natürlichen oder synthetischen elastischen Vulkanisat;
vermischt.

Für die einzelnen Verbindungen sowie das Polymer selber gelten die vorstehend erläuterten Bevorzugungen, ebenso kann zusätzlich einer der oben beschriebenen weiteren Bestandteile verwendet werden.

Die erfindungsgemässe Zusammensetzung kann auf an sich bekannte Weise hergestellt werden, wozu man unter Verwendung an sich bekannter Vorrichtungen, wie Kalander, Mischer, Kneter, Extruder und dergleichen, die genannten Additive und gegebenenfalls weitere Zusätze mit dem Polymer vermischt. Die Additive können dabei einzeln oder in Mischung miteinander zugegeben werden. Es ist auch möglich sogenannte Masterbatches einzusetzen.

Das nach vorliegender Erfindung erhältliche antistatisch-ausgerüstete Polymer kann auf bekannte Weisen in die gewünschte Form gebracht werden. Solche Verfahren sind beispielsweise Mahlen, Kalandrieren, Extrudieren, Spritzgiessen, Spinnen, Pressschmelzen, Rotationsguss, Thermoformung oder Extrusions-Blasen. Das antistatisch-ausgerüstete Polymer kann auch zu Schaumstoffen verarbeitet werden.
Die folgenden Beispiele erläutern die Erfindung weiter. Teile und Prozente beziehen sich, wie auch in der übrigen Beschreibung, auf das Gewicht, sofern nicht anders angegeben. Bei Angaben von Zahlenintervallen, wie auch in der übrigen Beschreibung, sind die Grenzwerte eingeschlossen.

### Beispiel 1

### Herstellung von antistatischem HD-PE

58,8 g HD-PE-Pulver (Hostalen® GF 7660, Hoechst) und 1,2 g einer Lösung von Polyethylenglykollaurat (Irgastat® 51, Ciba Spezialitätenchemie), enthaltend 5 % NaCIO₄·H₂O, werden mit einem Spatel vermischt und diese Mischung auf einem Zweiwalzen-Kalander bei 160°C (Walzzeit 5 min, Drehzahl 26/32 U/min, Spalt 0,5 mm) zu einem Walzfell verarbeitet. Aus diesem werden anschliessend in einer geheizten Hochdruckpresse Pressplatten von 0,5 mm Dicke hergestellt (Heiztemperatur 180°C, Heizzeit 5 min). Abgekühlt werden die Pressplatten in einer zweiten, wassergekühlten Presse ( 5 min) unter Druck. Einen Tag nach der Herstellung zeigen die Platten bei 20 % r. F. einen Oberflächenwiderstand R_{OG} (gemessen mit der Schutzringelektrode nach DIN 53482, 20 cm², Spalt 5mm, nach 5 min. bei 500 Volt) von 1,05•10¹¹ Ohm, der nach einwöchiger Lagerung an der Luft bei ca. 50% r.F. auf 1,1•10¹⁰ Ohm fällt.

### Beispiel 2

### Herstellung von antistatischen HD-Polyethylen-Spritzgussplatten

Zu 1500 g HD-PE Statoil® H 870 (stabilisiert, Pulver) werden 38,5 g einer Lösung von Polyethylenglykollaurat (Irgastat® 51, Ciba Spezialitätenchemie), enthaltend 5 % NaCIO₄·H₂O, gegeben und in einem Henschel-Mischer während einer Minute bei 1000 U/min (Wasserkühlung) gemischt. Aus dieser Mischung wird mit einem Zweischnecken-Extruder (Berstorff 23 D) Granulat hergestellt, dieses getrocknet und in einer Arburg-Spritzgussmaschine Typ 210 zu 1mm-Plättchen (67x 51 mm) verarbeitet (Temperatur 210-220 Grad Celsius, Zyklus-Zeit 36 sec). Einen Tag nach der Herstellung zeigen die Plättchen einen Oberflächenwiderstand R_{OG} von 8,7•10⁹ Ohm, nach 3 Tagen 4,5•10⁹ Ohm (bei 50% r.F.).Gemessen wird nach DIN 53482 mit einer Schutzringelektrode (20 cm², Spalt 5mm, nach 5 Minuten bei 500 Volt). Die Oberflächenwiderstände gemessen mit einer Federzungenelektrode nach DIN 53482 betragen R_{OA} 1,4•10¹⁰ Ohm (nach 1 Tag) und 9,1•10⁹ Ohm (nach 3 Tagen).

### Beispiel 3

### Herstellung von antistatischem Styrol-Butadien-Blockpolymer

59,1 g SB-Blockcopolymer (Styrolux® RE 31, BASF) werden mit 0,90 g einer Lösung von Polyethylenglycollaurat (Irgastat® 51, Ciba Spezialitätenchemie), enthaltend 5 % NaCIO₄·H₂O, versetzt und mit einem Spatel vermischt. Diese Mischung wird auf einem Zweiwalzen-Kalander bei 180°C (Walzzeit 5 min, Drehzahl 26/32 U/min, Spalt 0,50 mm verarbeitet. Aus der abgenommenen Masse werden bei 190°C (5 min) in einer geheizten Hochdruckpresse Pressplatten von 0,5 mm Dicke hergestellt. Abgekühlt werden die Platten in einer zweiten, wassergekühlten Presse (5 min) unter Druck. Einen Tag nach der Herstellung zeigen die Platten bei 20% r.F. einen Oberflächenwiderstand R_{OG} von 1•10¹² Ohm, der nach einwöchiger Lagerung an Luft (50% r.F.) auf 2,8•10⁹ Ohm fällt. Gemessen wird nach DIN 53482 mit einer Schutzringelektrode. Die Platten sind weiss-opak.

### Beispiel 4

### Herstellung eines antistatischen, hellen Vulkanisats

Zu einer Mischung, bestehend aus 100 Teilen SBR 1502, 10 Teilen Kronos CL-220, 70 Teilen Tixosil® Einex , 37,5 Teilen Naftolen® ZM, 2,5 Teilen ZnO, 1 Teil Stearinsäure, 1 Teil Paraffin, 3 Teilen Diethylenglycol, 0.65 Teilen Schwefel, 0,8 Teilen Vulkacit® MOZ, 1 Teil Vulkacit D, werden 5 Teile Polyethylenglycollaurat (Irgastat 51®, CIBA Spezialitätenchemie, enthaltend 5 % NaCIO₄·H₂O) gegeben und auf einem Zweiwalzenkalander 20 Minuten bei 60°C (17/21 U/min) gemischt. Mit 5 g des erhaltenenen Walzfelles werden im Rheometer (Monsanto) bei 160°C die Vulkanisationsparameter ermittelt. Die restliche Mischung wird dann mit einer Presse in einer 2 mm-Form bei 160°C und 100 bar bis T 95 vulkanisiert. 3 Tage nach der Herstellung werden an der Probe die elektrischen Widerstandswerte nach DIN 53482 mit einer Schutzringelektrode (20cm², Spalt 5 mm, nach 5 min. bei 500 Volt) ermittelt. Der Oberflächenwiderstand R_{OG} beträgt bei 50% r.F. 5•10⁹ Ohm, der Durchgangswiderstand R_{V} 4•10⁸ Ohm.

### Beispiel 5

### Herstellung eines antistatischen, hellen Schwefelvulkanisats

Zu einer Mischung, bestehend aus 100 Teilen EPDM BUNA AP 451, 5 T. ZnO, 1 Teil Stearinsäure, 50 Teilen Tixosil® 50, 10 Teilen Naftolen® ND, 1 Teil Schwefel, 0.4 Teilen Vulkacit® Mercapto, 0.8 Teilen Vulkacit Thiuram, werden 5 Teile Polyethylenglycollaurat (Irgastat® 51, Ciba Spezialitätenchemie, enthaltend 5 % NaCIO₄·H₂O) gegeben und auf einem Zweiwalzenkalander 20 Minuten bei 60°C (17/21 U/min) gemischt. Mit 5 g des erhaltenen Walzfells werden in einem Rheometer (Monsanto) bei 160°C die Vulkanisationsparameter ermittelt. Mit der restlichen Mischung wird dann in einer 2 mm-Form bei 160°C und 100 bar in einer heizbaren Presse bis T 95 vulkanisiert. 3 Tage nach der Herstellung werden an der Probe die elektrischen Widerstandswerte nach DIN 53482 mit einer Schutzringelektrode ( 20 cm², Spalt 5mm, nach 5 min. bei 500 Volt) ermittelt. Der Oberflächenwiderstand R_{OG} beträgt bei 50% r.F. 1,4•10⁹ Ohm, der Durchgangswiderstand R_{V} 4•10⁷ Ohm.

### Beispiel 6

### Herstellung eines antistatischen, hellen, peroxidvernetzten Vulkanisats

Zu einer Mischung BR/SBR/IR Grundmischung bestehend aus 10 Teilen Cariflex® IR 305, 20 T. Cariflex SBR 1210, 70 T. Taktene® BR 1220, 30 T. Aerosil® VN 3, 0,5 Teilen Dicup® 40 werden 5 Teile Polyethylenglycollaurat (Irgastat® 51, Ciba Spezialitätenchemie, enthaltend 5 % NaCIO₄·H₂O) gegeben und auf einem Zweiwalzenkalander 20 Minuten bei 60°C (17/21 U/min) gemischt. Mit 5 g des erhaltenen Walzfelles werden in einem Rheometer (Monsanto) bei 160°C die Vulkanisationsparameter ermittelt. Die restliche Mischung wird dann in einer 2 mm-Form bei 160°C und 100 atü Druck in einer Presse bis T 95 vulkanisiert. 3 Tage nach der Herstellung werden an einer Probe die elektrischen Widerstandswerte nach DIN 53482 mit einer Schutzringelektrode (20 cm², Spalt 5 mm, nach 5 min. bei 500 Volt) ermittelt. Der Oberflächenwiderstand R_{OG} beträgt bei 50% r.F. 1•10⁹ Ohm, der Durchgangswiderstand R_{V} 6•10⁷ Ohm.

### Beispiel 7

### Herstellung eines antistatischen, hochflexiblen Styrol-Butadien-Blockcopolymers

58.8 g SB-Blockcopolymer STYROFLEX® BX 6104 (BASF) und 1,2 g einer Lösung von Polyethylenglycollaurat (Irgastat® 51, Ciba Spezialitätenchemie), enthaltend 5 % NaCIO₄·H₂O, werden mit einem Spatel vermischt und diese Mischung auf einem Zweiwalzen-Kalander bei 185°C (Walzzeit 5 min., Drehzahl 26/32 U/min., Spalt 0.5 mm) gemischt. Aus der erhaltenen Masse werden anschliessend in einer geheizten Hochdruckpresse Pressplatten von 0,5 mm Dicke hergestellt (Heiztemperatur 195 °C, Heizzeit 5 min.). Abgekühlt werden die Pressplatten in einer zweiten, wassergekühlten Presse (5 min.) unter Druck. Eine Woche nach der Herstellung zeigen die Platten einen Oberflächenwiderstand R_{OG} (gemessen mit der Schutzringelektrode nach DIN 53482, 20 cm², Spalt 5mm, nach 5 min. bei 500 Volt) von 1•10¹⁰ Ohm (bei 55 %r.F.) und einen Oberflächenwiderstand R_{OA} (gemessen mit der Federzungenelektrode nach DIN 53482) von 2•10¹¹ Ohm (bei 55 % r.F.).

### Beispiel 8

### Herstellung von antistatischen Polyamid 12-Pressplatten

57.6 g Polyamid 12-Pulver (Aldrich) und 2.4 g einer Lösung von Polyethylenglycollaurat (Irgastat 51, Ciba Spezialitätenchemie, enthaltend 4% NaCIO₄·H₂O) werden mit einem Spatel vermischt und diese Mischung auf einem Zweiwalzen-Kalander bei 188°C (Walzzeit 5 min, Drehzahl 26/32 U/min, Spalt 0.5mm) homogen gemischt. Aus der erhaltenen PolymerMasse werden anschliessend mit einer Hochdruckpresse Pressplatten von 0.5 mm Dicke hergestellt (Heiztemperatur 180°C, Presszeit 5 min). Die Platten zeigen eine Woche nach der Herstellung bei 50%r.F. einen Oberflächenwiderstand R_{OG} von 2.5•10¹¹ Ohm (gemessen mit der Schutzringelektrode nach DIN 53482 , 20 cm², Spalt 5mm, nach 5 min bei 500 Volt). Eine Vergleichsprobe ohne antistatischen Zusatz zeigt dagegen >2•10¹⁴ Ohm.

Mit der Federzungenelektrode (ebenfalls DIN 53482) ergibt sich ein Oberflächenwiderstand R_{OA} von 7•10¹⁰ Ohm bei Pressplatten mit erfindungsgemässem Antistatikum und ein Durchgangswiderstand Rᵥ von 4.5•10⁸ Ohm.
Der entsprechende Durchgangswiderstand einer Probe ohne Zusatz beträgt 2•10¹² Ohm, mit der Ringelektrode gemessen.

### Beispiel 9

### Herstellen von antistatischen Polyamid-12-Spritzgussplatten

3426.5 g Polyamid-12-Pulver ( Vestamid L1901), 3.5 g Irganox 1098 (Ciba SC) und 70 g einer Lösung Polyethylenglycollaurat (Irgastat 51, Ciba SC) enthaltend 5% NaCIO₄·H₂O werden mit einem 2-Schneckenextruder bei 210 °C extrudiert. Mit diesem Compound werden durch Spritzguss bei 220 °C Platten 10'10'0.2 cm hergestellt. Nach 3 Wochen wird der Oberflächenwiderstand R_{OG} nach DIN 53482 mit der Schutzringelektrode bestimmt. Er beträgt 1•10¹⁰ Ohm (50% r.F.).
Eine Probe ohne antistatischen Zusatz weist 1•10¹³ Ohm auf.
Der Durchgangswiderstand Rv der Probe mit Antistatikum beträgt 4.1•10⁹ Ohm.
Der entsprechende Durchgangswiderstand einer Probe ohne Zusatz beträgt 3•10¹² Ohm (50% r.F.).

### Vergleichsbeispiel mit einem nicht erfindungsgemässen Polymeren

Zu 54 g aufgeschmolzenem ABS Cycolac TCA (GEP) werden auf einem Zweiwalzen-Kalander 6 g einer Lösung von Irgastat 51 (Ciba Spezialitätenchemie), enthaltend 5% NaCIO₄·H₂O, gegeben und eingearbeitet (Walzentemperatur 170°C, Drehzahl 22/26 U/min, Spalt 0.7 mm, Walzzeit 5min). Aus dem erhaltenen Walzfell werden Pressplatten von 0.5 mm Dicke herstellt. Die nach DIN 53 482 gemessenen Proben zeigen Oberflächen - und Durchgangswiderstände von ca. 1•10¹³ Ohm, eine Vergleichsprobe ohne Zusatz weist 1•10¹⁴ Ohm auf.

## Patentansprüche

1. Zusammensetzung enthaltend
(a) Polyethylen hoher Dichte (HDPE), Polyamid 11, Polyamid 12 (PA 11, PA 12), ein natürliches oder synthetisches elastomeres Polymer oder Copolymer oder ein natürliches oder synthetisches elastische Vulkanisat;
(b) ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O) oder CH₂=CCH₃-C(O),
R₂ C₁-C₂₄-Alkyl, C₂-C₂₄-Alkenyl, CH₂-COOH, oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist;
und (c) ein Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer einfachen oder mehrfachen organischen Carbonsäure ist.

2. Zusammensetzung nach Anspruch 1, enthaltend als Komponente a) HDPE.

3. Zusammensetzung nach Anspruch 1, enhaltend als Komponente a) ein synthetisches oder natürliches Elastomer, welches ein Polydien enthält.

4. Zusammensetzung nach Anspruch 1, enthaltend ein synthetisches Elastomer auf Basis konjugierter Diene mit monovinylsubstituierten Aromaten.

5. Zusammensetzung gemäss Anspruch 1, enthaltend als Komponente (b) Polypropylenglykollaurylester, Polypropylenglykololeylester, Polyethylenglykolmonomethylether, Polyethylenglykoldimethylether, Polyethylenglykollaurylester, Polyethylenglykololeylester, Polyethylenglykololeylether, Polyethylenglykolsorbitanmonolaurylester, Polyethylenglykolstearylester, Polyethylenglykolpolypropylenglykollaurylether oder Polyethylenglykollaurylethercarbonsäure.

6. Zusammensetzung nach Anspruch 5, enthaltend als Komponente b) Polyethylenglykololeylether oder Polyethylenglykollaurylester.

7. Zusamensetzung nach Anspruch 1, enthaltend 0,05 bis 20 Gew.-Teilen, bezogen auf 100 Gew.-Teile Polymer, der Komponente b).

8. Zusammensetzung nach Anspruch 1 enthaltend als anorganisches Salz (c) NaCIO₄, LiCF₃SO₃, KCIO₄ oder LiCIO₄.

9. Zusammensetzung nach Anspruch 1, enthaltend 0,005 bis 3 Gew.-Teilen, bezogen auf 100 Gew.-Teile Polymer der Komponente c).

10. Zusammensetzung nach Anspruch 1, worin das Gewichtsverhältnis von Komponente (b) zu Komponente (c) zwischen 1:1 und 100:1 beträgt.

11. Verwendung einer Additivmischung, enthaltend
ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, CH₂-COOH oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist;
und ein Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer einfachen oder mehrfachen organischen Carbonsäure ist;
zur Verbesserung der antistatischen Eigenschaft von Polyethylen hoher Dichte (HDPE), Polyamid 11, Polyamid 12 (PA 11, PA 12), einem natürlichen oder synthetischen elastomeren Polymer oder Copolymer oder einem natürlichen oder synthetischen elastischen Vulkanisat.

12. Verfahren zur Herstellung von einem antistatisch-ausgerüsteten Polyethylen hoher Dichte (HDPE), Polyamid 11, Polyamid 12 (PA 11, PA 12), einem natürlichen oder synthetischen elastomeren Polymer oder Copolymer oder einem natürlichen oder synthetischen elastischen Vulkanisat, dadurch gekennzeichnet, dass man unter Verwendung von Vorrichtungen, wie Kalander, Mischer, Kneter, Extruder eine Additivmischung,
enthaltend
ein Polyoxyalkylen der Formel
R₁-O-[CH(R₃)-CH₂-O-]ₙ-[CH₂-[CH(OH)]ₚ-CH₂-O]_{q}-[C(O)]ᵣ-R₂ (I), wobei
R₁ H, C₁-C₂₄-Alkyl, C₂-C₂₄-Alkenyl, CH₂=CH-C(O)- oder CH₂=CCH₃-C(O)-,
R₂ C₁-C₂₄-Alkyl, C₂-C₂₄-Alkenyl, CH₂-COOH oder N(C₁-C₂₀-Alkyl)₂,
R₃ H oder CH₃,
n eine Zahl grösser oder gleich 2,
p eine Zahl von 1 bis 6, und
q und r, unabhängig voneinander, 0 oder 1 ist;
und ein Salz der Formel {M^{z+}ₐA^{(az/b)-}_{b}} wobei
M ein z-wertiges Alkalimetall-, Erdalkalimetall- oder Zinkkation,
a und b, unabhängig voneinander, eine Zahl zwischen 1 und 6, und
A ein Anion einer anorganischen Protonensäure oder einer organischen Sauerstoffsäure des Schwefels ist;
als solche oder in Form ihrer einzelnen Bestandteile und gegebenenfalls weiterer Zusätze mit einem Polyethylen hoher Dichte (HDPE), PA 11, PA 12, einem natürlichen oder synthetischen elastomeren Polymer oder Copolymer oder einem natürlichen oder synthetischen elastischen Vulkanisat;
vermischt.
